# EUROPEAN PATENT APPLICATION

(11) **EP 3 389 000 A1**
(43) Date of publication of application: **17.10.2018**
(21) Application number: 16872302.1
(22) Date of filing: 24.11.2016
(51) Int. Cl.: G06Q 30/06

(54) **WASHING MACHINE AND ONE-CLICK ORDER METHOD USING THE SAME**

(30) Priority: 07.12.2015 CN 201510897278
(71) Applicant: Qingdao Haier Drum Washing Machine Co., Ltd., Qingdao, Shandong 266101 (CN)
(72) Inventor: SHU, Hai, Qingdao Shandong 266101 (CN); XU, Sheng, Qingdao Shandong 266101 (CN); ZHANG, Tao, Qingdao Shandong 266101 (CN); HUANG, Zhenxing, Qingdao Shandong 266101 (CN)
(74) Representative: Beck & Rössig European Patent Attorneys
(86) International application number: PCT/CN2016/107063
(87) International publication number: WO 2017/097110

(57) **Abstract**

The disclosure provides a one-click ordering method for a washing machine and the washing machine. The method comprises: S1, enabling the washing machine to receive a trigger signal; S2, sending an ordering command to a server, wherein the ordering command comprises identity recognition information and an identifier of the trigger signal; and S3, enabling the server to search for commodity attribute information, consignee information and payment manner corresponding to the ordering command, and generate a commodity order after the server receives the ordering command. When receiving the trigger signal, the washing machine sends the ordering command to the server; after reception of the ordering command, the server automatically generates the commodity order; in such a manner, when a commodity is used up, the preset corresponding commodity may be rapidly purchased on the washing machine, the shopping operation of a user is simplified, the shopping time of the user is saved, the shopping efficiency of the user is improved, thus rapid ordering of the commodity is achieved.

## Description

### TECHNICAL FIELD

The disclosure relates to the field of washing machines, and particularly relates to a one-click ordering method for a washing machine and the washing machine.

### BACKGROUND

With upgrade of washing machines, the functions of the washing machines are also increasing, including automatically adding detergents, softeners, or even giving a prompt to remind a user of purchasing corresponding washing product in time when the detergents and the softeners run short.

However, at present, when purchasing the washing product, the user tends to remember the washing product and then goes to a supermarket to directly purchase the washing product, or searches for the corresponding washing product in a shopping mall of a mobile phone or a computer and selects a certain commodity and then places an order and pays to complete the purchase. But the following case often happens in life, when washing clothes, the user finds that the washing product is used up and remembers to buy the washing product at that time but forgets after being engaged in other tasks; when needing to employ the washing product again, the user finds that the washing product has been used up. In general, the user uses the washing product in the same brand and category, if the user searches the washing product in an online shopping mall and then selects the washing product one by one each time, the user needs to spend a lot of time. Thus, for fast-paced urban white-collar employees, the purchase mode is very inconvenient. Therefore, there is an urgent need for a washing machine that can quickly purchase such washing products directly on the washing machine when the washing products are used up.

In view of this, the present disclosure is proposed.

### SUMMARY

The technical problem to be solved by the disclosure is to overcome the defect in the prior art and provide a one-click ordering method for the washing machine. Through setting of commodity attribute information, consignee information and payment manner once, when an ordering device on the washing machine is triggered each time, the washing machine directly sends an ordering command to a server; after reception of the ordering command, the server automatically generates a commodity order. In such a manner, the ordering may be rapidly performed on the washing machine when a washing product is used up, the operation of a user is simplified, and thus the rapid ordering of the washing product is achieved.

Another objective of the disclosure is to provide a washing machine adopting the method.

The technical solution adopted to solve the technical problem of the disclosure is to provide a one-click ordering method for the washing machine. The method includes the following steps:
S1, enabling the washing machine to receive a trigger signal;
S2, sending an ordering command to a server, wherein the ordering command includes identity recognition information and an identifier of the trigger signal; and
S3, enabling the server to search for commodity attribute information, consignee information and payment manner corresponding to the ordering command, and generate a commodity order after the server receives the ordering command.

Furthermore, the corresponding relation between the ordering command and the commodity attribute information, the consignee information and the payment manner is preset in the server.

Furthermore, in prior to step S1, the method further includes setting the corresponding relation between the ordering command and the commodity attribute information, the consignee information and the payment manner, wherein the setting method includes the following steps:
A1, binding the washing machine on an APP client;
A2, enabling the APP client to acquire the identity recognition information and the identifier of the trigger signal, and store the identity recognition information and the identifier of the trigger signal into the ordering command; and
A3, enabling the APP client to set the commodity attribute information, the consignee information and the payment manner corresponding to the ordering command, and store the corresponding relations into the server.

Moreover, the identity recognition information includes a washing machine code and/or a user ID.

Moreover, after step S1, the method further includes the following steps:
B1, sending a prompt whether to confirm ordering or not to an intelligent terminal, or
   displaying whether to confirm ordering or not on a display interface of the washing machine; and
B2, executing the step S2 after the washing machine receives an ordering-confirmed command.

Furthermore, in the step S3, when the commodity order is generated, a commodity order generating date is further recorded.

In the step S1, when receiving the trigger signal, the washing machine also acquires a current date, and calculates a time interval between the current date and the last commodity order generating date; and if the time interval is within a preset range, the step S2 is executed.

Moreover, the consignee information at least includes a consignee name, a consignee phone number and a delivery address; and
the commodity attribute information includes at least one of a product category, a name, a brand, an article number of a commodity bar code, a specification, a price range, a quantity, a model, a style, a set, a shopping mall name and a store name.

Moreover, the commodity attribute information further includes a URL address of a commodity or a preset commodity serial number.

Furthermore, the washing machine is provided with an ordering device which can send the trigger signal.

The ordering device is a touch panel, and when the touch panel is activated in accordance with a preset trajectory, the trigger signal corresponding to the preset trajectory is sent to the washing machine and the step S1 is executed; or
the ordering device is a physical key, and when the physical key is pressed in accordance with a preset key-press manner, the trigger signal corresponding to the preset key-press manner is sent to the washing machine and the step S 1 is executed; or
the ordering device is a combined key composed of at least two existing keys on the washing machine, and when the combined key is pressed, the trigger signal corresponding to the combined key is sent to the washing machine and the step S1 is executed.

The disclosure also provides a washing machine adopting the method. The washing machine is provided with an ordering device which is used for triggering the washing machine to send an ordering command to a server, and the server generates a commodity order according to the ordering command.

Moreover, the ordering device is a touch panel disposed on the washing machine, and a manner for activating the touch panel includes touching the touch panel in accordance with the preset trajectory; or
the ordering device is a physical key disposed on the washing machine, and a manner for triggering the physical key at least includes any one of pressing once, continuously pressing twice, continuously pressing for three times, long pressing once, shortly pressing once and then long pressing once and shortly pressing twice and then long pressing once; or
the ordering device is a combined key composed of at least two existing keys on the washing machine, and a manner for triggering the combined key includes simultaneously pressing all the keys composing the combined key.

The beneficial effects of the technical solution provided by the specific implementation of the disclosure are as follows:
when receiving the trigger signal, the washing machine sends the ordering command to the server; after reception of the ordering command, the server automatically generates the commodity order; in such a manner, when a commodity is used up, the preset corresponding commodity may be rapidly purchased on the washing machine, the shopping operation of the user is simplified, the shopping time of the user is saved, the shopping efficiency of the user is improved, thus rapid ordering of the commodity is achieved.

### BRIEF DESCRIPTION OF THE DRAWINGS

In order to explain the technical solutions in the specific implementation of the disclosure more clearly, a brief introduction on the accompanying drawings which are needed for use in the specific implementation is given below. Apparently, the accompanying drawings in the description below are merely some of the embodiments of the disclosure, other accompanying drawings may be obtained based on the accompanying drawings by those of ordinary skilled in the art without any creative effort.
Fig. 1 is a flow diagram of a one-click ordering method for the washing machine provided by the disclosure;
Fig. 2 is a flow diagram of another one-click ordering method for the washing machine provided by the disclosure;
Fig. 3 is a flow diagram of another one-click ordering method for the washing machine provided by the disclosure;
Fig. 4 is a flow diagram of a setting method provided by the disclosure;

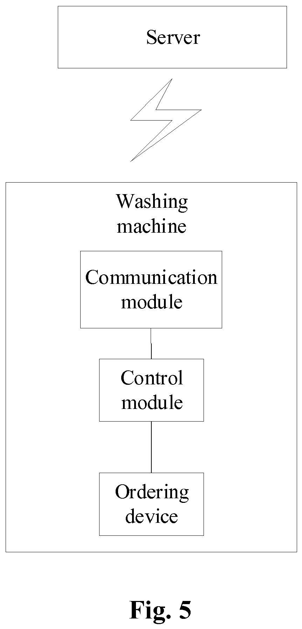

Fig. 5 is a structural schematic diagram of a washing machine provided by the disclosure;
Fig. 6 is a structural schematic diagram of a control panel of a washing machine provided by the disclosure;
Fig. 7 is a structural schematic diagram of another control panel of a washing machine provided by the disclosure.

### DETAILED DESCRIPTION

In the disclosure, a washing machine is an intemet-of-things washing machine and the washing machine is in communication connection with a server. The communication technology is any one of WI-FI, GPRS, ZigBee and RS-485 technologies. After enabling of the intemet-of-things function, the washing machine may perform data exchange with the server.

The implementation is further described below in combination with accompanying drawings and embodiments.

### Embodiment I

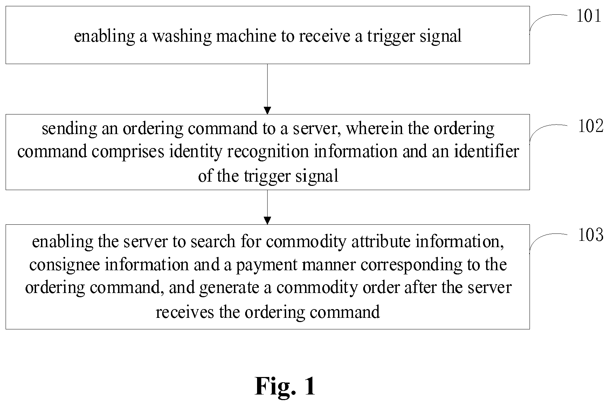

The embodiment provides a one-click ordering method for the washing machine. The washing machine is in communication connection with a server. As shown in Fig. 1, the method includes the following steps.

Step 101, a washing machine receives a trigger signal.

Wherein, the trigger signal received by the washing machine is sent by an intelligent terminal. Preferably, the trigger signal is generated by the washing machine. Specifically, the washing machine is provided with an ordering device. When the ordering device is triggered, the trigger signal is sent to a control module of the washing machine.

Preferably, the ordering device is a touch panel disposed on the washing machine. When a user touches the touch panel in accordance with a preset trajectory, the trigger signal corresponding to the preset trajectory is sent to the control module of the washing machine.

Wherein, the touch panel is obtained by plating a surface of transparent glass with a layer of tin antimony oxide thin film, namely a protective film, and electronic signal anti-interference treatment is performed between the touch panel and a liquid crystal screen. The touch panel is a direct manifestation of the touch technology and is used for inducing a contact signal, analyzing, and identifying the contact signal. Thus, when the user touches the touch panel according to certain trajectory, the touch panel may induce the touch trajectory of the user correspondingly.

Wherein, the preset trajectory can be in any pattern. The preset trajectory of each pattern is a trigger manner. The preset trajectories of different patterns correspond to different trigger manners, and each trigger manner corresponds to one trigger signal. Preferably, the preset trajectories are preset in the washing machine by a developer. For example, the trajectory preset in the washing machine is a letter pattern C, when the user touches the touch panel according to the letter pattern C, the trigger signal corresponding to the letter pattern C is sent to the control module of the washing machine. Further preferably, the preset trajectory is freely set by the user and is stored in the washing machine.

Further preferably, the ordering device is a physical key disposed on the washing machine. When the physical key is pressed in accordance with a preset key-press manner, the trigger signal corresponding to the preset key-press manner is sent to the washing machine.

Wherein, the key-press manner of the physical key is preset in the washing machine by a developer. Each key-press manner is a trigger manner and each trigger manner corresponds to one trigger signal. Preferably, the key-press manner at least includes any one of pressing once, continuously pressing twice, continuously pressing for three times, long pressing once, shortly pressing once and then long pressing once, and shortly pressing twice and then long pressing once.

For example, the preset trigger manner includes pressing once and continuously pressing for three times, which respectively correspond to a first trigger signal and a second trigger signal. When the user continuously presses the physical key for three times, the physical key sends the second trigger signal to the control module of the washing machine, and the control module of the washing machine receives the second trigger signal.

Preferably, the physical key is a newly-added key other than a power key, a start/pause key, a washing program key and washing parameter keys, wherein the washing parameter keys are used for controlling various parameters in a washing program, such as rinsing, dewatering, a water level, time, a temperature, drying and a rotating speed.

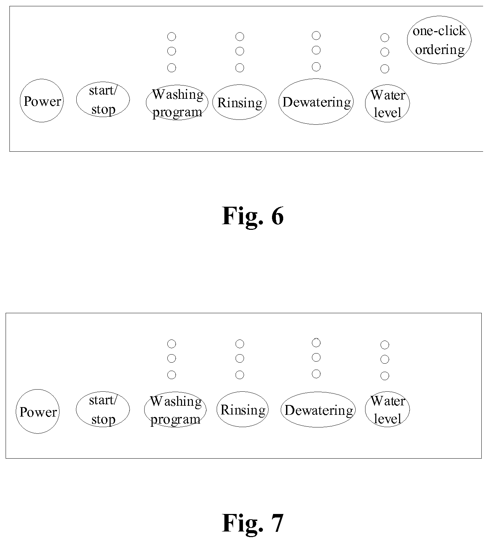

For instance, as shown in Fig. 6, a washing machine is provided with a power key, a start/pause key, a washing program key, a rinsing key, a dewatering key, a water level key and a one-click ordering key. The one-click ordering key is an ordering device and is used for triggering the washing machine to send an ordering command to a server, and the server generates a commodity order according to the ordering command.

Preferably, the physical key is any one of the washing parameter keys. If the physical key is triggered after the washing process is selected, the function of the corresponding washing parameter is executed; if the physical key is triggered but the washing process is not selected, the function that the washing machine is triggered to send the ordering command to the server is executed.

For instance, as shown in Fig. 7, a washing machine is provided with a power key, a start/pause key, a washing program key, a rinsing key, a dewatering key and a water level key, wherein the water level key is further used as an ordering device for triggering the washing machine to send an ordering command to a server. After the washing machine is started, if the water level key is pressed when the washing program is not selected, the water level key triggers the ordering function at the moment, namely, a trigger signal corresponding to the water level key is sent to the washing machine, the washing machine is triggered to send the ordering command to the server; if the water level key is pressed after the washing program is selected, the water level key triggers the function for setting of a water level of the washing machine.

Preferably, the ordering device is a combined key composed of at least any two keys on the washing machine. When the combined key is pressed, the trigger signal corresponding to the combined key is sent to the washing machine.

The manner for triggering the combined key includes simultaneously pressing all the keys composing the combined key.

For example, as shown in Fig. 7, an ordering device of a washing machine is a combined key composed of a rinsing key, a dewatering key and a water level key. When the rinsing key, the dewatering key and the water level key are simultaneously pressed, the trigger signal corresponding to the combined key is sent to the washing machine.

Regardless of whether the ordering device is the physical key, the touch panel or the combined key and whichever the trigger manner is, a user can complete the operation only by one step and can enable the trigger device to send the trigger signal to the washing machine. Therefore, the operation of the user is very convenient and does not consume a lot of time.

Step 102, sending the ordering command to the server, wherein the ordering command includes identity recognition information and an identifier of the trigger signal.

Specifically, when receiving the trigger signal, the washing machine correspondingly acquires the identifier of the trigger signal and the identity recognition information and stores the identifier of the trigger signal and the identity recognition information into the ordering command. The ordering command is sent to the server.

Wherein, a corresponding relation between the trigger signal and the identifier of the trigger signal is pre-stored in the washing machine, and the identity recognition information is a washing machine code and/or a user ID. Specifically, when leaving a factory, each washing machine is provided with a unique code for identifying the washing machines of different devices. The code is preset in a control module of the washing machine. After the washing machine receives the trigger signal, the code is acquired from the control module of the washing machine. The user ID is an account number via which the user logs in the server, and the account number is unique in the server and is used for identifying different users. The account number of the user is preset in the control module of the washing machine. After the washing machine receives the trigger signal, the account number is acquired from the control module of the washing machine.

Step 103, after reception of the ordering command, the server searching for commodity attribute information, consignee information and payment manner corresponding to the ordering command, and generating a commodity order.

Wherein, the corresponding relation between the ordering command and the commodity attribute information, the consignee information and the payment manner is preset in the server. Specifically, after corresponding information is filled in when the user purchases the washing machine, a developer adds the corresponding relation to the server; preferably, the user actively fills in the corresponding relation in a webpage of a corresponding APP client or PC and stores the corresponding relation into the server.

After reception of the ordering command, the server searches for the information corresponding to the ordering command in a corresponding relation table and generates a commodity order. Specifically, the commodity to be purchased by the user is determined according to the commodity attribute information, the commodity is ordered according to a payment manner, and a commodity order containing the commodity attribute information and the consignee information is generated, preferably, the payment manner is also displayed in the commodity order. Furthermore, the server sends the commodity order to a merchant and reminds the merchant of a new commodity order, the merchant selects the corresponding commodity according to commodity attributes of the commodity in the commodity order and fills in a logistic express bill according to the consignee information and send the commodity to a consignee address through an express company or a logistics company.

Wherein, the commodity attribute information includes at least one of a product category, a name, a brand, an article number of a commodity bar code, a specification, a price range, a quantity, a model, a style, a set, a shopping mall name and a store name, preferably a combination of multiple attributes. The unique commodity is confirmed according to the attribute of the commodity. Preferably, the commodity attribute information is the commodity relevant to the washing machine, preferably a washing product.

For example, the product category is a washing product; the name is washing powder, a detergent, a softener and so on; the brand is Tide, Liby and the like; the specification is n kg, n ml and so on; the shopping mall name is Ehaier, Tmall and so on; the store name is an XX flagship store; the price range is RMB 0-n yuan; the model/style is a full-effect fragrance type, a lavender gentle scent type and the like; the set is two-for-one and the like; the article number of the commodity bar code is a code on external packing of the commodity, and a certain unique commodity is determined according to the code.

If the commodity attribute is the article number of the commodity bar code, the unique commodity is determined according to the article number. For example, for the commodity with the article number of 6920174700787, it is known that the commodity has a category of washing product, a name of laundry detergent, a brand of Liby, a specification of 500g and a model/style of Pure Rose. If the unique commodity cannot be determined by one attribute, the commodity attribute is a combination of multiple attributes. The unique commodity is determined by the combined commodity attributes, preferably, the shopping mall name and the store name for purchase of the commodity is further determined, for instance, the commodity with the article number of 6920174700787 is purchased in a Haier flagship store of Ehaier.

Preferably, the commodity attribute information further includes a URL (Uniform Resource Locator) address of the commodity. The URL address is used for pointing to a unique destination address of the commodity in an online shopping mall. After the destination address is determined, part of commodity attributes, such as a shopping mall name, a store name, and a product category, a name, a brand, a specification, a model, a style and a price of the commodity, is correspondingly determined.

Preferably, the commodity attribute information further includes a preset commodity serial number. Specifically, one commodity serial number is preset for each selling commodity in the commodity shopping mall. Different from the article number of the commodity bar code, a certain commodity of a certain store in a certain shopping mall is determined according to the commodity serial number, whereas, only a certain commodity is determined through the article number of the commodity bar code. The function of the commodity serial number is similar to that of the URL address, however, compared with the URL address, the commodity serial number has the advantages that after the commodity is put off shelves and then put on shelves, the URL address may change, but the commodity serial number is not changed.

The specific commodity attribute is set according to actual purchase situations.

Wherein, the consignee information at least includes a consignee name, a consignee phone number and a delivery address, preferably including a postal code of the delivery address.

Wherein, the payment manner includes online payment or pay on delivery. For the online payment, a selectable payment system (such as credit card payment, debit card payment, Alipay payment or WeChat payment) is further preset. The payment manner also includes a priority payment order of the payment system (for example, Alipay payment is used in priority, if the payment fails, the WeChat payment is employed). The payment manner further includes a payment limit (for instance, if one-off payment is smaller than RMB 200 yuan, the automatic payment can be performed, the monthly payment should not exceed RMB 500 yuan).

In this embodiment, after receiving the trigger signal, the washing machine directly sends the ordering command to the server. After reception of the ordering command, the server automatically generates the commodity order. For a user, the user only needs one operation, such as pressing a button, to order a corresponding preset commodity. In such a manner, when the corresponding commodity, particularly the washing product is used up, the preset corresponding commodity is rapidly purchased on the washing machine, the shopping operation of the user is simplified, the shopping time of the user is saved, thus rapid ordering of the washing product is achieved, and meanwhile the user experience is also improved.

### Embodiment II

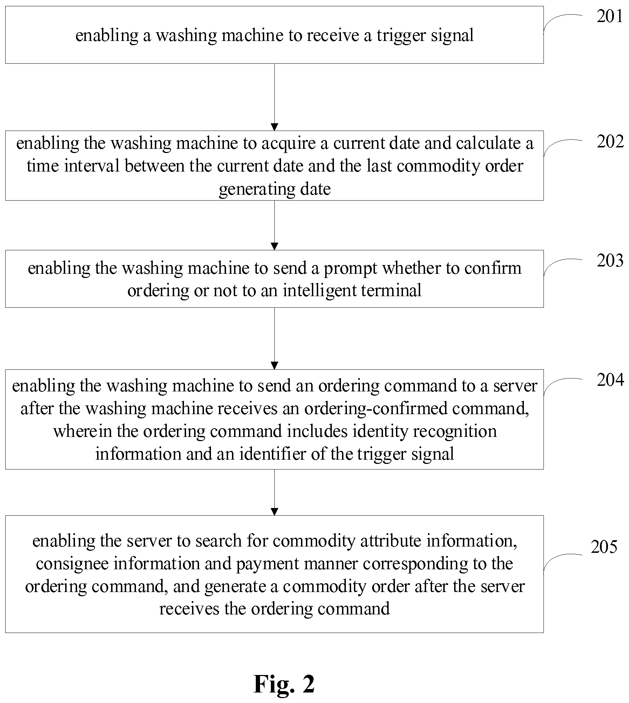

The embodiment provides a one-click ordering method for the washing machine. The washing machine is in communication connection with a server. On the basis of the embodiment I, after reception of a trigger signal, the washing machine still needs to perform corresponding calculation or reconfirms whether to order or not, and executes a subsequent operation according to a calculation result or a received command. As shown in Fig. 2, the method includes the following steps.

Step 201, a washing machine receives a trigger signal.

The specific description of the step is the same as that of the step 101 and is not repeated herein.

Step 202, the washing machine acquires a current date, and calculates a time interval between the current date and the last commodity order generating date.

Specifically, when generating a commodity order, a server records the date and synchronizes the date to the washing machine. When receiving the trigger signal, the washing machine acquires the current date, and calculates the time interval between the current date and the last commodity order generating date. If the time interval is within a preset range, the step S203 is executed.

For example, a preset range is that n is longer than 30 days, the acquired current date is November 9, 2015, the last commodity order generating date is October 1, 2015, thus, the time interval is 39 days which is within the preset range, and the washing machine goes to the step 203.

Wherein, if the washing machine receives the trigger signal for the first time, a record of the last commodity order generating date is not stored in the washing machine, the step is ignored, and the washing machine directly goes to the step 203.

Step 203, the washing machine sends a prompt whether to confirm ordering or not to an intelligent terminal.

Wherein, after enabling of a networking function, the washing machine is matched and connected with the intelligent terminal. A corresponding APP is installed on the intelligent terminal. The washing machine performs data interaction with an APP client.

Specifically, the washing machine sends a prompt message to the intelligent terminal. The prompt message is used for prompting whether to confirm an ordering request or not. After opening of the prompt message, the intelligent terminal selects a CONFIRM option or a CANCEL option on an operation interface. When selecting the CONFIRM option, the intelligent terminal sends an ordering-confirmed command to the washing machine.

Wherein, the step is further replaced with a step of displaying a prompt whether to confirm ordering or not on a display interface of the washing machine. Specifically, for an intelligent washing machine with a touch panel, the prompt whether to confirm ordering or not is directly displayed on the display interface of the washing machine, and operation options CONFIRM and CANCEL are provided. When selecting the CONFIRM option, the washing machine receives the ordering-confirmed command.

The step is set to prevent people from mistakenly pressing the ordering device. A user can turn on a mistakenly-pressing prevention function of the ordering device on the APP. After turning on, when receiving the trigger signal, the washing machine does not directly send the ordering command to the server but sends the prompt whether to confirm ordering or not to the intelligent terminal or displays the prompt whether to confirm ordering or not on the washing machine. After reception of the ordering-confirmed command, the washing machine executes the step 204.

Step 204, when receiving the ordering-confirmed command, the washing machine sends the ordering command to the server, wherein the ordering command comprises identity recognition information and an identifier of the trigger signal.

Specifically, when receiving the ordering-confirmed command, the washing machine correspondingly acquires the identifier of the trigger signal and the identity recognition information, stores the identifier of the trigger signal and the identity recognition information to the ordering command and sends the ordering command to the server.

Wherein, the trigger signal and the identifier of the trigger signal are pre-stored in the washing machine. The identity recognition information is a washing machine code or also a user ID. Specifically, when leaving a factory, each washing machine is provided with a unique code for identifying the washing machines of different devices. The code is preset in a control module of the washing machine. After the washing machine receives the trigger signal, the code is acquired from the control module of the washing machine. The user ID is an account number via which the user logs in the server and the account number is unique in the server and is used for identifying different users. The account number of the user may be preset in the control module of the washing machine. After the washing machine receives the trigger signal, the account number is acquired from the control module of the washing machine.

Step 205, after reception of the ordering command, the server searches for commodity attribute information, consignee information and payment manner corresponding to the ordering command, and generates a commodity order.

Wherein, when the commodity order is generated, the commodity order generating date is further recorded.

Other description information in this step is the same as that of the step 103 and is not repeated herein.

In this embodiment, the steps 202 and 203 are set to prevent a mistakenly-pressing operation, thus, the sequence of the steps 202 and 203 is not limited. The sequence of execution of the step 203 and then execution of the step 202 and corresponding adjustment of execution conditions in the step 204 also belongs to the technical solution of the disclosure. In addition, only one step of the steps 203 and 204 is retained according to practical application situations.

In this embodiment, after reception of the trigger signal, the washing machine confirms whether to order or not. After reception of the ordering-confirmed command, the washing machine sends the ordering command to the server. After reception of the ordering command, the server automatically generates the commodity order. For a user, the user only needs one operation, such as pressing a button and reconfirming on the washing machine or the intelligent terminal, to order a corresponding preset commodity. In such a manner, when the corresponding commodity, particularly the washing product is used up, the preset corresponding commodity is rapidly purchased on the washing machine, the shopping operation of a user is simplified, the shopping time of the user is saved, thus rapid ordering of the washing product is achieved, and meanwhile the user experience is also improved.

### Embodiment III

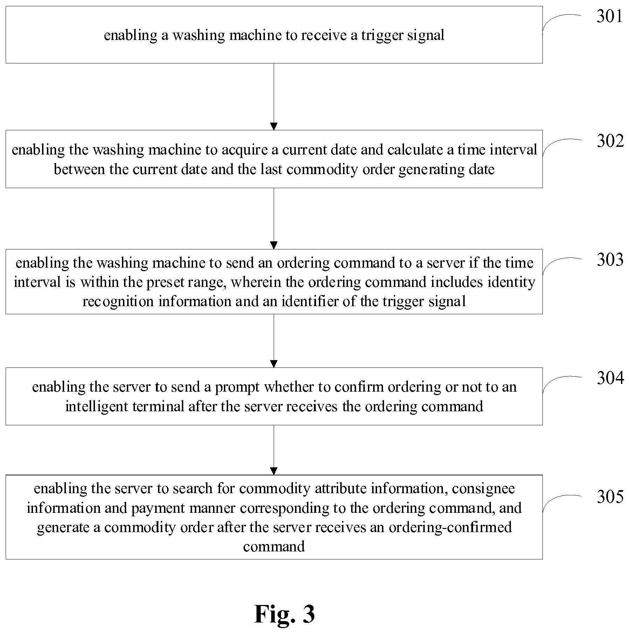

The embodiment provides a one-click ordering method for the washing machine. The washing machine is in communication connection with a server. Different from the embodiment II, this embodiment enables the server to send a prompt whether to confirm ordering or not. As shown in Fig. 3, the method includes the following steps.

Step 301, a washing machine receives a trigger signal.

The specific description of the step is the same as that of the step 201 and is not repeated herein.

Step 302, the washing machine acquires a current date, and calculates a time interval between the current date and the last commodity order generating date.

The specific description of the step is the same as that of the step 202 and is not repeated herein.

Step 303, if the time interval is within the preset range, the washing machine sends an ordering command to a server, wherein the ordering command includes identity recognition information and an identifier of the trigger signal.

Specifically, if the time interval is within the preset range, the washing machine correspondingly acquires an identifier of the trigger signal and the identity recognition information, stores the identifier of the trigger signal and the identity recognition information into the ordering command and sends the ordering command to the server.

Wherein, the trigger signal and the identifier of the trigger signal are pre-stored in the washing machine. The identity recognition information is a washing machine code or a user ID. Specifically, when leaving a factory, each washing machine is provided with a unique code for identifying the washing machines of different devices. The code is preset in a control module of the washing machine. After the washing machine receives the trigger signal, the code is acquired from the control module of the washing machine. The user ID is an account number via which the user logs in the server and the account number is unique in the server and is used for identifying different users. The account number of the user is preset in the control module of the washing machine. After the washing machine receives the trigger signal, the account number is acquired from the control module of the washing machine.

Step 304, after reception of the ordering command, the server sends a prompt whether to confirm ordering or not to an intelligent terminal.

Wherein, an APP is installed on the intelligent terminal. After the intelligent terminal is networked, the APP performs data interaction with the server.

Specifically, the server sends a prompt message to the intelligent terminal. The prompt message is used for prompting whether to confirm an ordering request or not. After opening of the prompt message, the intelligent terminal selects a CONFIRM option or a CANCEL option on an operation interface. When selecting the CONFIRM option, the intelligent terminal sends an ordering-confirmed command to the server.

Preferably, the prompt message is further sent to the intelligent terminal in a form of SMS. The terminal sends the ordering-confirmed command to the server in the form of SMS.

Step 305, after reception of the ordering-confirmed command, the server searches for commodity attribute information, consignee information and payment manner corresponding to the ordering command, and generates a commodity order.

The specific description of this step is the same as that of the step 205 and is not repeated herein.

In this embodiment, after reception of the trigger signal, the washing machine judges whether the time interval of the adjacent two purchases is within a preset range or not. A subsequent operation is executed according to a judgment result. After reception of the ordering command, the server sends a prompt message whether to confirm ordering or not. After reception of the ordering-confirmed command, the server generates the commodity order automatically. For a user, the user only needs one operation, such as pressing a button and reconfirming on the washing machine or the intelligent terminal, to order a corresponding preset commodity. In such a manner, when the corresponding commodity, particularly the washing product is used up, the preset corresponding commodity is rapidly purchased on the washing machine, the shopping operation of a user is simplified, the shopping time of the user is saved, thus rapid ordering of the washing product is achieved, and meanwhile the user experience is also improved.

### Embodiment IV

In this embodiment, a washing machine is in communication connection with a server. The server is in communication connection with an intelligent terminal. The communication technology is any one of WI-FI, GPRS, ZigBee and RS-485 technologies. The intelligent terminal is a smart phone/PAD/PC.

Wherein, the server is used for providing management platform services of the washing machine, including registration and management of a user account number, and binding and management of the washing machine and the user account number. The server further sends a control command to the washing machine and receives a message reported by the washing machine and may further synchronize a running state of the washing machine to an intelligent terminal. After an APP which can control the washing machine is installed on the intelligent terminal, an account is registered on an APP client and is bound with the washing machine.

Wherein, the washing machine is provided with an ordering device. The ordering device includes at least one trigger manner. Each trigger manner corresponds to one trigger signal. A user sets different pre-purchase commodities on the APP client according to different trigger signals, preferably, the pre-purchase commodities are set as commodities related to the washing machine, further preferably, washing products. Since household washing products are generally in some specific brands which need to be purchased regularly and are usually placed nearby the washing machine, the pre-purchase commodities are preferably set as the washing products. When finding that the washing product is going to use up, a user can order the washing product conveniently and rapidly.

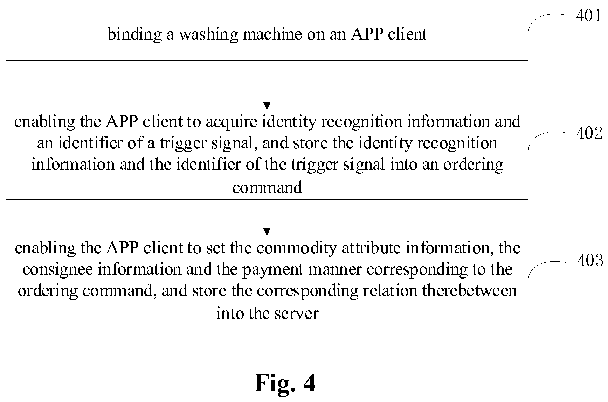

When the user employs the ordering device for the first time, the ordering device is correspondingly set on the APP client. As shown in Fig. 4, the setting method includes the following steps.

Step 401, a washing machine is bound on the APP client.

Specifically, after starting of the washing machine, the user enters the APP client to enable a function of searching for the washing machine. When detecting the washing machine, the washing machine is automatically connected and bound to the APP client. Wherein, the connection between the APP client and the washing machine is established through a WI-FI technology, a Bluetooth technology and so on.

If the APP client and the washing machine cannot be connected, the user may actively input a model of the washing machine on a page of the APP client to bind the washing machine.

For example, for a washing machine with a model of A-309S of the XX brand, a user can enable a function of searching for the washing machine on the APP client, when the washing machine with the model of A-309S of the XX brand is detected, the washing machine is automatically connected and bound to the APP client through WI-FI.

Step 402, the APP client acquires identity recognition information and an identifier of a trigger signal, and stores the identity recognition information and the identifier of the trigger signal into an ordering command.

Acquiring the identifier of the trigger signal specifically includes: after the washing machine and the APP client are bound, enabling the APP client to acquire a model of the washing machine and display all trigger manners corresponding to the washing machine of the model in an APP setting interface, and enabling the APP client to acquire the identifier of the trigger signal corresponding to the trigger manner when the user selects a certain trigger manner.

For example, for a washing machine with a model of A-309S of the XX brand, the washing machine is provided with a physical key. A corresponding trigger manner includes pressing once, continuously pressing twice and continuously pressing for three times. After the APP client and the washing machine with the model of A-309S are bound, the APP client acquires the model of A-309S, the trigger manners of pressing once, continuously pressing twice and continuously pressing for three times are displayed in the setting interface. When the user selects pressing once on the setting interface, the APP client acquires the identifier of the trigger signal corresponding to pressing once.

Wherein, the identity recognition information is a washing machine code or a user ID. Specifically, when leaving a factory each washing machine is provided with a unique code for identifying the washing machines of different devices. The user ID is an account number via which the user logs in the server and the account is unique in the server and is used for identifying different users.

Acquiring the user ID specifically includes: directly acquiring the user ID logging in the APP client, synchronizing the user ID to a control module of the washing machine, conveniently acquiring the user ID when the washing machine receives the trigger signal, storing the user ID into the ordering command of the washing machine, and sending the user ID to the server.

For example, the user ID logging in the APP client with a phone number 136****1234, the APP client directly acquires the user ID "136****1234" and synchronizes the user ID to the washing machine.

Acquiring a washing machine code specifically includes: acquiring the washing machine code from the washing machine, or acquiring the washing machine code when detecting that a user inputs the washing machine code on the APP client.

For example, a factory-leaving code of the washing machine is 20150910****1234, and the APP client acquires the code 20150910****1234 from the washing machine or a user directly inputs the code 20150910****1234 on a setting interface of the APP client.

Specifically, after acquisition of the identity recognition information and the identifier of the trigger signal, the APP client stores the identity recognition information and the identifier of the trigger signal into the ordering command, wherein the ordering command stored by the APP client is the same as that in the washing machine. Preferably, the ordering command stored by the APP client is further synchronized to the washing machine.

For the ordering command containing the identity recognition information and the identifier of the trigger signal, the ordering commands sent by different washing machine devices or user IDs are different. Different trigger manners correspond to different trigger signals. The ordering commands sent by the same washing machine device or user ID are different. Therefore, each ordering command is unique.

Step 403, the APP client sets the commodity attribute information, the consignee information and the payment manner corresponding to the ordering command and stores the corresponding relation therebetween into the server.

Specifically, when the APP client detects that the user is setting the commodity attribute information, the consignee information and the payment manner on a setting page after the identity recognition information and the identifier of the trigger signal are stored into the ordering command, the APP client stores information set by the user, establishes a corresponding relation between the ordering command and the commodity attribute information, the consignee information and the payment manner and stores the corresponding relation into the server.

Setting for the commodity attribute information is as follows: the APP client displays all commodity attributes on a setting interface for a user to select, and also matches the most similar commodity attribute according to information manually input by the user. After the user selects a certain commodity attribute, the APP client displays the relevant commodity attributes on the setting interface and hides the irrelevant commodity attributes. Further preferably, when the user sets the commodity attribute, the APP client automatically selects other default commodity attributes and displays the default commodity attributes on the setting interface, and the user modifies the default commodity attributes.

Furthermore, after completion of setting of the user or in a setting process, the APP client further uploads the commodity attribute information set by the user to the server in real time. The server inquires a commodity corresponding to the commodity attribute information set by the user. If the commodity does not exist, the server further sends a prompt of no matched commodity to the APP client. The APP client displays the prompt on the setting interface.

Setting for the consignee information includes the following steps: the user manually inputs relevant information on a setting page and the APP client stores the information input by the user, preferably, the APP client further detects a historical purchase record of the user, the consignee information in the historical purchase record is automatically set as default consignee information, and the user further changes the consignee information.

Setting for the payment manner includes the following steps: the user selects online payment or pay on delivery. When the online payment is selected, a payment system (such as credit card payment, debit card payment, Alipay payment or WeChat payment) is selected. Preferably, the priority payment order of the payment system (for example, Alipay payment is used in priority, if the payment fails, the WeChat payment is employed) is further set. Further preferably, the payment limit (for instance, if one-off payment is smaller than RMB 200 yuan, automatic payment is performed, the monthly payment should not exceed RMB 500 yuan) is further set.

Preferably, if the user does not set the payment manner, the payment manner is defaulted to pay on delivery and the user is informed by SMS, or a corresponding prompt message is displayed on the APP client.

In this embodiment, for an intelligent internet-of-things washing machine which supports to install the APP client, the APP client is further directly installed on the washing machine. The user registers an account on the washing machine and binds the account with the washing machine, sets the commodity attribute information, the consignee information and the payment manner corresponding to the ordering command on the washing machine, and stores the corresponding relation therebetween into the server.

After completion of the setting, the setting content is stored. When purchasing each time in future use, the user triggers the ordering device on the washing machine according to the set trigger manner, the washing machine executes the ordering method of the embodiment I or the embodiment II or the embodiment III to automatically order, in such as manner, the shopping operation of a user is simplified, the shopping time of the user is saved, and the user experience is improved.

### Embodiment V

The embodiment provides a washing machine. The washing machine is an internet-of-things washing machine, wherein the washing machine is provided with an ordering device which is used for triggering the washing machine to send an ordering command to a server. The server generates a commodity order according to the ordering command.

Specifically, the washing machine includes a communication module and a control module. The washing machine performs data interaction with the server through the communication module. When the ordering device is triggered, a corresponding trigger signal is sent to the control module of the washing machine. After the control module receives the trigger signal, a corresponding ordering command is sent to the server through the communication module, wherein the ordering command includes identity recognition information and an identifier of the trigger signal. After reception of the ordering command, the server searches for commodity attribute information, consignee information and payment manner corresponding to the ordering command, wherein corresponding relations between the ordering command and the commodity attribute information, the consignee information and the payment manner are preset in the server. The server automatically generates a commodity order according to the searched information.

Preferably, the ordering device is a touch panel disposed on the washing machine, and a manner for triggering the touch panel includes: touching the touch panel in accordance with a preset trajectory. Wherein, the touch panel is obtained by plating a surface of transparent glass with a layer of tin antimony oxide thin film, namely a protective film, and electronic signal anti-interference treatment is performed between the touch panel and a liquid crystal screen. The touch panel is a direct manifestation of the touch technology and is used for inducing a contact signal, analyzing, and identifying the contact signal. Thus, when a user activates the touch panel according to certain trajectory, the touch panel induces the touch trajectory of the user correspondingly.

The preset trajectory can be in any pattern. The preset trajectory of each pattern is a trigger manner. The preset trajectories of different patterns correspond to different trigger manners, and each trigger manner corresponds to one trigger signal. Preferably, the preset trajectory is preset in the washing machine by a developer. For example, the trajectory preset in the washing machine is a letter pattern C, the trigger manner is: touching the touch panel according to the trajectory of the letter C.

Further preferably, the ordering device is a physical key disposed on the washing machine, and a preset key-press manner of the physical key is preset in the washing machine by a developer. Each key-press manner is one trigger manner. Each trigger manner corresponds to one trigger signal. Preferably, a manner for triggering the physical key at least includes any one of: pressing once, continuously pressing twice, continuously pressing for three times, long pressing once, shortly pressing once and then long pressing once, and shortly pressing twice and then long pressing once.

Preferably, the physical key is a newly-added key other than a power key, a start/pause key, a washing program key and washing parameter keys, wherein the washing parameter keys are used for controlling various parameters in a washing program, such as rinsing, dewatering, a water level, time, a temperature, drying and a rotating speed.

For example, as shown in Fig. 6, a washing machine is provided with a power key, a start/pause key, a washing program key, a rinsing key, a dewatering key, a water level key and a one-click ordering key. The one-click ordering key is the ordering device and is used for triggering the washing machine to send the ordering command to the server, and the server generates the commodity order according to the ordering command.

Preferably, the physical key is any one of the washing parameter keys. If the physical key is triggered after the washing process is selected, the function of the corresponding washing parameter is executed; if the physical key is triggered but the washing process is not selected, the function that the washing machine is triggered to send the ordering command to the server is executed.

For example, as shown in Fig. 7, a washing machine is provided with a power key, a start/pause key, a washing program key, a rinsing key, a dewatering key and a water level key, wherein the water level key is further used as an ordering device for triggering the washing machine to send an ordering command to the server. After the washing machine is started, if the water level key is pressed when the washing program is not selected, the water level key executes the ordering function at the moment, namely, a trigger signal corresponding to the water level key is sent to the washing machine, the washing machine is triggered to send the ordering command to the server; if the water level key is pressed after the washing program is selected, the water level key executes the function for setting of a water level of the washing machine.

Preferably, the ordering device is a combined key composed of at least any two keys on the washing machine, and a manner for triggering the combined key includes simultaneously pressing all the keys composing the combined key.

For example, as shown in Fig. 7, an ordering device is a combined key composed of a rising key, a dewatering key and a water level key, and a manner for triggering the combined key includes simultaneously pressing the rising key, the dewatering key and the water level key.

Regardless of whether the ordering device is the physical key, the touch panel or the combined key, and whichever the trigger manner is, a user can complete ordering by using the washing machine only by one step. The washing machine which has a purchasing function not only improves the shopping habit of a user but also saves the shopping time of the user, improves the shopping efficiency of the user, thereby greatly improves the shopping experience of the user and also improves the user experience for utilization of the washing machine.

The aforementioned embodiments are merely preferred embodiments of the disclosure, rather than limiting the disclosure in any form; although the disclosure is disclosed as above with reference to the preferred embodiments, they are not used to limit the disclosure; changes or modifications could be made to equivalent embodiments with equivalent changes using the abovementioned technical content by those skilled in the art without departing from the scope of the technical solutions of the disclosure, however, any simple alterations, equivalent changes and modifications made to the above embodiments according to the technical essence of the disclosure without departing from the content of the technical solutions of the disclosure shall still fall into the scope of the solutions of the disclosure.

## Claims

1. A one-click ordering method for a washing machine comprising:
S1, enabling the washing machine to receive a trigger signal;
S2, sending an ordering command to a server, wherein the ordering command comprises identity recognition information and an identifier of the trigger signal; and
S3, enabling the server to search for commodity attribute information, consignee information and payment manner corresponding to the ordering command, and generate a commodity order, after the server receives the ordering command.

2. The one-click ordering method for the washing machine according to claim 1, wherein corresponding relations between the ordering command and the commodity attribute information, the consignee information and the payment manner are preset in the server.

3. The one-click ordering method for the washing machine according to claim 2, further comprising, in prior to the step S1, setting the corresponding relations between the ordering command and the commodity attribute information, the consignee information and the payment manner, wherein a setting method comprises:
A1, binding the washing machine on an APP client;
A2, enabling the APP client to acquire the identity recognition information and the identifier of the trigger signal, and store the identity recognition information and the identifier of the trigger signal into the ordering command; and
A3, enabling the APP client to set the commodity attribute information, the consignee information and the payment manner corresponding to the ordering command, and store the corresponding relations between the ordering command and the commodity attribute information, the consignee information and the payment manner in the server.

4. The one-click ordering method for the washing machine according to claim 3, wherein the identity recognition information comprises a washing machine code and/or a user ID.

5. The one-click ordering method for the washing machine according to claim 1 further comprising, after the step S1,
B1, sending a prompt whether to confirm ordering or not to an intelligent terminal, or
displaying the prompt whether to confirm ordering or not on a display interface of the washing machine; and
B2, executing the step S2 after the washing machine receives an ordering-confirmed command.

6. The one-click ordering method for the washing machine according to claim 1, wherein, in the step S3, when the commodity order is generated, a date for generating the commodity order is further recorded; and
in the step S1, when receiving the trigger signal, the washing machine also acquires the current date, and calculates a time interval between the current date and the date for generating the commodity order last; and if the time interval is within a preset range, the step S2 is executed.

7. The one-click ordering method for the washing machine according to any one of claims 1-6, wherein the consignee information at least comprises a consignee name, a consignee phone number and a delivery address; and
the commodity attribute information comprises at least one of a product category, a name, a brand, an article number of a commodity bar code, a specification, a price range, a quantity, a model, a style, a set, a shopping mall name and a store name.

8. The one-click ordering method for the washing machine according to claim 7, wherein the commodity attribute information further comprises a URL address of a commodity or a preset commodity serial number.

9. The one-click ordering method for the washing machine according to any one of claims 1-6, wherein the washing machine is provided with an ordering device which sends the trigger signal, wherein
the ordering device is a touch panel, and when the touch panel is activated in accordance with a preset trajectory, the trigger signal corresponding to the preset trajectory is sent to the washing machine and the step S1 is executed; or
the ordering device is a physical key, and when the physical key is pressed in accordance with a preset key-press manner, the trigger signal corresponding to the preset key-press manner is sent to the washing machine and the step S1 is executed; or
the ordering device is combined keys composed of at least two keys existed on the washing machine, and when the combined keys are pressed, the trigger signal corresponding to the combined key is sent to the washing machine and the step S1 is executed.

10. The washing machine adopting the method according to any one of claims 1-9, wherein the washing machine is provided with the ordering device used for triggering the washing machine to send the ordering command to the server, and the server generates the commodity order according to the ordering command.

11. The washing machine according to claim 10, wherein the ordering device is a touch panel disposed on the washing machine, and a manner for triggering the touch panel comprises: touching the touch panel in accordance with a preset trajectory; or
the ordering device is a physical key disposed on the washing machine, and a manner for triggering the physical key at least comprises any one of a group consisting of pressing once, continuously pressing twice, continuously pressing for three times, long pressing once, shortly pressing once and then long pressing once, and shortly pressing twice and then long pressing once; or
the ordering device is combined keys composed of at least two keys existed on the washing machine, and a manner for triggering the combined keys comprises simultaneously pressing all the keys composing the combined key.
